(19) **Europäisches Patentamt / European Patent Office / Office européen des brevets**

(11) **EP 3 196 234 A1**

(12) # EUROPEAN PATENT APPLICATION
published in accordance with Art. 153(4) EPC

(43) Date of publication:
**26.07.2017 Bulletin 2017/30**

(21) Application number: **15841483.9**

(22) Date of filing: **16.09.2015**

(51) Int Cl.:
*C08J 5/18* (2006.01)   *B32B 27/32* (2006.01)
*C08L 23/12* (2006.01)   *H01B 3/00* (2006.01)
*H01B 3/44* (2006.01)   *H01G 4/18* (2006.01)

(86) International application number:
**PCT/JP2015/076278**

(87) International publication number:
**WO 2016/043217 (24.03.2016 Gazette 2016/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.09.2014 JP 2014191077**
**15.06.2015 JP 2015120199**

(71) Applicant: **Toray Industries, Inc.**
**Tokyo 103-8666 (JP)**

(72) Inventors:
• **IMANISHI, Yasuyuki**
**Otsu-shi**
**Shiga 520-8558 (JP)**

• **OHKURA, Masatoshi**
**Otsu-shi**
**Shiga 520-8558 (JP)**
• **OKADA, Kazuma**
**Otsu-shi**
**Shiga 520-8558 (JP)**
• **KUMA, Takuya**
**Otsu-shi**
**Shiga 520-8558 (JP)**

(74) Representative: **Webster, Jeremy Mark et al**
**Mewburn Ellis LLP**
**City Tower**
**40 Basinghall Street**
**London EC2V 5DE (GB)**

(54) ## POLYPROPYLENE FILM AND FILM CAPACITOR

(57)    A polypropylene film wherein, a percentage (125R%) calculated by measuring the dielectric breakdown voltage (V/$\mu$m) of the film at 30 points in a 125°C atmosphere, and dividing the difference between the maximum value and the minimum value among 20 points obtained by respectively excluding the 5 points having the greatest breakdown voltage and the 5 points having the lowest, by the average value of these 20 points is less than 50%; and a percentage (23R%) calculated by measuring the dielectric breakdown voltage (V/$\mu$m) of the film at 30 points in a 23°C atmosphere, and dividing the difference between the maximum value and the minimum value among 20 points obtained by respectively excluding the 5 points having the greatest breakdown voltage and the 5 points having the lowest, by the average value of these 20 points is less than 20%. The present invention relates to a polypropylene film having few insulation defects and minimal variance of dielectric breakdown voltage in high-temperature environments, and in particular there is provided a polypropylene film that exhibits high withstand voltage and reliability in high-voltage capacitor applications.

**Description**

Technical Field

The present invention relates to a polypropylene film suitable for packaging, industrial use, and the like, and more particularly to a polypropylene film suitable for use as a dielectric for capacitors that suffers from few insulation defects, has a reduced variation in dielectric breakdown voltage in high temperature environment, and serves particularly to achieve high voltage resistance and reliability when used in capacitors for high voltages.

Background Art

Having high transparency, good mechanical characteristics, and good electric characteristics, polypropylene film has been applied in various fields including packaging materials, tape materials, and electric materials such as cable wrapping and capacitors.

In the field of capacitor production, in particular, such film has been preferred for high voltage capacitors, for both direct current and alternating current, because of its high voltage resistance and low loss characteristics.

In recent years, increasing numbers of electric devices have been replaced with inverter-based ones and accordingly, there are stronger demands for smaller-sized, large-capacity capacitors. To meet demands in their markets, particularly for automobiles (including hybrid cars), photovoltaic power generators, and wind turbine generators, there is an urgent demand for polypropylene film products that have improved voltage resistance and further reduced thicknesses while maintaining high productivity and processability.

To maintain voltage resistance, productivity, and processability, polypropylene film needs to be stretched to a high ratio during film production, and in order to ensure improved voltage resistance, in particular, it is important to perform stretching uniformly in-plane and reduce insulation defects causing low voltage destruction. From the viewpoint of heat resistance, furthermore, it is said that future SiC-based power semiconductors will be used in environments at higher than 120°C. For use in capacitors with further increased heat resistance and voltage resistance, there is a demand for films with voltage resistance stability at high temperatures around 125°C. However, as described in Non-patent document 1, the upper limit of the use temperature for polypropylene film has been said to be about 110°C, and it has been difficult to maintain a required voltage resistance stably in an environment at a temperature exceeding 120°C, at 125°C for example.

To provide a polypropylene film that show high performance in environments at temperatures around 125°C, some techniques have been developed to produce highly heat-resistant polypropylene resin by controlling the molecular weight distribution and adding polypropylene with long chain branches (for example, Patent document 1). Other studies have proposed to form a cover layer over the surface of a film prepared as described above to provide a roughed surface (for example, Patent document 2). However, although the voltage resistance at 125°C can be improved to some degree by adding polypropylene with long chain branches to polypropylene resin with a controlled molecular weight distribution, the stretching ratio is low and molten sheets are cooled for solidification at such a high temperature that voids are formed as a result of crystal transformation from $\beta$-crystals to $\alpha$-crystals during stretching. Accordingly, the voltage resistance may be low at some measuring positions and vary over the entire film and it has been difficult to develop capacitors that can show sufficiently improved voltage resistance and reliability in high temperature environments.

Prior Art Documents

Patent Documents

Patent document 1: Published Japanese Translation of PCT International Publication JP 2010-501712
Patent document 2: Published Japanese Translation of PCT International Publication JP 2010-501382

Non-patent documents

Non-patent document 1: Nikkei Electronics, Sep. 17, 2012, p.57-62

Summary of the Invention

Problems to be Solved by the Invention

The present inventors have arrived at the present invention as a result of intensive studies aiming to solve the above problems. The present invention relates to a polypropylene film that suffers from few insulation defects, has a reduced variation in dielectric breakdown voltage in high temperature environments, and serves particularly to achieve high voltage resistance and reliability when used in capacitors for high voltages.

Means of Solving the Problems

The above object is achieved by a polypropylene film that meets the following requirement: when the dielectric breakdown voltage ($V/\mu m$) thereof in a 125°C atmosphere is measured at 30 points, followed by excluding the five largest measurements and the five smallest measurements, the percentage (125R%) of the difference between the largest and the smallest of the remaining 20 measurements divided by the average of the 20 measurements is smaller than 50%, and when the dielectric breakdown voltage ($V/\mu m$) thereof in a 23°C environment is measured at 30 points, followed by excluding the five largest measurements and the five smallest measurements, the percentage (23R%) of the difference between the largest and the smallest of the remaining 20 measurements divided by the average of the 20 measurements is smaller than 20%. Advantageous Effect of the Invention

The present invention can provide a polypropylene film that suffers from few insulation defects and has a reduced variation in dielectric breakdown voltage in high temperature environments, and accordingly such film is useful in various fields including packaging materials, tape materials, and electric materials such as cable wrapping and capacitors, and serves particularly to achieve high voltage resistance and reliability when used in capacitors for high voltages.

Discription of Preferred Embodiments

The polypropylene film according to the present invention meets the following requirement: when the dielectric breakdown voltage ($V/\mu m$) thereof in a 125°C environment is measured at 30 points, followed by excluding the five largest measurements and the five smallest measurements, the percentage (125R%) of the difference between the largest and the smallest of the remaining 20 measurements divided by the average of the 20 measurements is smaller than 50%, and when the dielectric breakdown voltage ($V/\mu m$) thereof in a 23°C environment is measured at 30 points, followed by excluding the five largest measurements and the five smallest measurements, the percentage (23R%) of the difference between the largest and the smallest of the remaining 20 measurements divided by the average of the 20 measurements is smaller than 20%. Here, the parameters (125 R%) and (23 R%) represent the variation in dielectric breakdown voltage at 125°C and 23°C, respectively, and a smaller R% means a more uniform in-plane structure with smaller number of insulation defects, allowing the film to serve for producing a capacitor with high voltage resistance and reliability. For the polypropylene film according to the present invention, (125R%) is more preferably less than 40% and still more preferably less than 30%. The lower limit is 1%. A (125R%) of 50% or more will result in a capacitor that suffers from a decrease in capacity or short-circuit breakage in a high temperature environment, leading to deterioration in the voltage resistance and a decrease in reliability. Further, (23R%) is more preferably less than 15% and still more preferably less than 10%. The lower limit is 1%. If (23R%) is 20% or more, the film will have a non-uniform structure at room temperature and will result in a capacitor that suffers from a decrease in capacity or short-circuit breakage at room temperature, leading to not only deterioration in the voltage resistance and a decrease in reliability, but also large deterioration in the voltage resistance and a large decrease in reliability in a high temperature environment. As a result of intensive studies, the present inventors have found that the percent values of (125R%) and (23R%) have strong correlation with the voltage resistance of a capacitor in a high temperature environment and that the control of (125R%) and (23R%) at small percent values is important to improve the capacitor characteristics, such as voltage resistance and reliability, in a high temperature environment. Here, the control of (125R%) and (23R%) of a polypropylene film in specific ranges can be achieved by controlling the various conditions described later, such as the raw materials, cooling temperature during cooling and solidification of a molten sheet, laminate structure, and particle addition, in desirable ranges, or carrying out a heat treatment and relaxation step, which follows the biaxial stretching, by appropriately performing treatment (a step for first stage treatment) at a lower temperature than the stretching temperature and subsequent heat treatment (a step for second stage treatment) at a temperature that is higher than the aforementioned treatment and lower than the temperature for stretching in the width direction in the biaxial stretching step.

For the polypropylene film according to the present invention, when the dielectric breakdown voltage ($V/\mu m$) thereof in a 125°C environment is measured at 30 points, followed by excluding the five largest and the five smallest dielectric breakdown voltage measurements, the average of the 20 remaining measurements is preferably 500 $V/\mu m$

or more, more preferably 525 V/$\mu$m or more, and still more preferably 550 V/$\mu$m or more. If the aforementioned average of dielectric breakdown voltage measurements taken from a film in a 125°C atmosphere is less than 500 V/$\mu$m, a capacitor produced therefrom may fail to have a sufficiently high voltage resistance in a high temperature environment.

For the polypropylene film according to the present invention, the gloss of at least one surface of the film is preferably 140% or more, more preferably 143% or more, and still more preferably 145% or more. Setting the gloss to less than 140%, that is, decreasing the gloss, acts to increase the density of light scattering at the film surface, or makes the surface rougher, possibly leading to a decrease or a variation in dielectric breakdown voltage. The upper limit of the gloss is 155%. Controlling the gloss of the polypropylene film according to the present invention in a desirable range is achieved by controlling the various conditions described later, such as the raw materials, cooling temperature during cooling and solidification of a molten sheet, laminate structure, and particle addition, in desirable ranges.

For the polypropylene film according to the present invention, the sum of the tensile strength at break in the film's main axis direction and the tensile strength at break in the perpendicular direction to the film's main axis, both measured at 23°C, is preferably 500 MPa or more, more preferably 530 MPa or more, and still more preferably 560 MPa or more. As described in detail later, the direction in which the tensile strength at break comes to a maximum when it is measured along a circle on the film plane is defined as the film's main axis direction. The direction at right angles to the main axis direction is defined as the perpendicular direction to the main axis. When the film sample is in the shape of a strip, reel, roll, etc., with a sample width of less than 50 mm and its main axis direction cannot be determined based on tensile strength at break measurement, the main axis direction and the perpendicular direction to the main axis are defined as described below based on measurement of the crystal orientation of the $\alpha$-crystal (110) plane of the polypropylene film determined by wide angle X-ray observation. Specifically, an X-ray beam is applied in the direction perpendicular to the film surface and the crystal peak at $2\theta$ = about 14° ($\alpha$-crystal (110) plane) is scanned in the circumferential direction. In the diffraction intensity distribution obtained, the direction in which the diffraction intensity is large is defined as the film's main axis direction and the direction at right angles thereto is defined as the perpendicular direction to the main axis. If the sum of the tensile strength at break in the film's main axis direction and the tensile strength at break in the perpendicular direction to the film's main axis, both measured at 23°C, is less than 500 MPa, a decrease in dielectric breakdown voltage or a variation in its value may occur or the film may be broken during its conveyance in a step for vapor deposition to form a metal layer or a step for winding up a capacitor element. The upper limit, on the other hand, is 700 MPa. The tensile strength at break measured at 23°C can be controlled in such a range by, for example, adjusting the amount of raw materials, the longitudinal and transverse stretching ratio, and the stretching temperature in the ranges described later, or carrying out heat treatment and relaxation, which follows the biaxial stretching, by appropriately performing treatment (a step for first stage treatment) at a lower temperature than the stretching temperature and subsequent heat treatment (a step for second stage treatment) at a temperature that is higher than the aforementioned treatment and lower than the temperature for stretching in the width direction in the biaxial stretching step. For the polypropylene film according to the present invention, furthermore, the tensile strength at break in the film's main axis direction at 23°C is preferably 150 MPa or more, more preferably 180 MPa or more, and still more preferably 200 MPa or more.

For the polypropylene film of the present invention, from the viewpoint of obtaining an appropriately roughened surface without reducing the gloss of the film surface in order to ensure uniform inter-film gaps of the films, smooth slippage between film and film or between film and conveying rollers, and capacitor reliability, at least either of the film surfaces has a three dimensional center surface average roughness SRa of preferably 30 nm or more, more preferably 50 nm or more, and still more preferably 70 nm or more. If the three dimensional center surface average roughness SRa is less than 30 nm, the slippage of the film may extremely deteriorate, leading to poor handleability and easy formation of creases. In addition, capacitors produced therefrom may suffer from large changes in capacity due to creases etc. during continuous operation and capacitors produced by stacking the films may fail to have appropriate gaps between film layers, leading to poor performance of the self-healing function and a decrease in capacitor reliability. The upper limit is 300 nm. Controlling the three dimensional center surface average roughness SRa of the polypropylene film according to the present invention in a desirable range is achieved by controlling the various conditions described later, such as the raw materials, cooling temperature during cooling and solidification of a molten sheet, laminate structure, and particle addition, in desirable ranges.

In the polypropylene film according to the present invention, at least the film layer at either of the surfaces preferably contains particles from the viewpoint of forming surface irregularities without reducing the gloss of the film surface to ensure high capacitor element processing suitability even when the film thickness is small and ensure high voltage resistance in a high temperature environment.

Examples of the particles used in the polypropylene film according to the present invention include inorganic particles and organic particles. Useful materials for the inorganic particles include metal oxides such as silica, alumina, titania, and zirconia, as well as barium sulfate, calcium carbonate, aluminum silicate, calcium phosphate, mica, kaolin, and clay. Of these, metal oxides such as silica, alumina, titania, and zirconia, as well as calcium carbonate are preferable. Useful organic particles include crosslinked particles of polymethoxy silane based compounds, crosslinked particles of polystyrene based compounds, crosslinked particles of acrylic based compounds, crosslinked particles of polyurethane based compounds, crosslinked particles of polyester based compounds, crosslinked particles of fluorine based compounds, and mixtures thereof.

The above inorganic particles and organic particles preferably have average particle diameters in the range of 0.03 to 10 $\mu$m. The average particle diameter is more preferably 0.05 to 6 $\mu$m, still more preferably 0.07 to 1 $\mu$m, and most preferably 0.08 to 0.25 $\mu$m. If the average particle diameter is less than 0.03 $\mu$m, the surface roughness may be so small that the handleability may not be sufficiently high and the capacitor reliability may decrease in some cases. If it is more than 10 $\mu$m, on the other hand, the film may be broken easily or particles may come off easily from thin film, possibly leading to insulation defects. Here, the average particle diameter of these inorganic particles and organic particles is the equivalent circle diameter determined by image processing of scanning electron microscopic photographs of the particles.

The particles preferably account for 0.01 to 1 part by mass of the total mass, or 100 parts by mass, of the polypropylene film. If the content is less than 0.01 part by mass, the handleability will not be sufficiently high and the capacitor reliability will decrease in some cases. If it is more than 1 part by mass, on the other hand, the film will be broken easily or particles will come off easily from thin film, possibly leading to insulation defects.

Here, the polypropylene film according to the present invention preferably has, at least at either of the surfaces, a constituent layer containing particles or a constituent layer constituting a blend resin of polypropylene and a thermoplastic resin incompatible with the polypropylene, and it is preferably in the form of a laminate film. Useful layer laminating methods include combining films by lamination, use of feed block type or multimanifold type equipment for co-extrusion, and coating, of which layer stacking by melt co-extrusion or coating is preferable from the viewpoint of production efficiency and cost. The laminate film preferably consists of two or more layers stacked in the film's thickness direction and more specifically, it has two or more layers with an A-layer located at least at either of the surfaces to form, for example, a two layer structure of A-layer / B-layer, preferably a three layer structure of A-layer / B-layer / A-layer or a four or more layer structure having an A-layer as the outmost layer at each of the film surfaces. Here, an A-layer is a constituent layer containing particles or a constituent layer containing a blend resin of polypropylene and a thermoplastic resin incompatible with the polypropylene. In general, roughing of a polypropylene film surface is carried out by applying a technique that makes use of crystal transformation, particularly for producing capacitors. In the film production process, a melt-extruded sheet is solidified on a casting (cooling) drum adjusted at a high temperature of 60°C or more to form $\beta$-crystal based spherulites, followed by a stretching step to cause crystal transformation of $\beta$-crystal, which is thermally unstable, into $\alpha$-crystal, thereby forming roughness on the film surface. During the crystal transformation step, however, voids may be formed not only on the surface, but also in inner of the film, possibly acting as insulation defects to cause a decrease in voltage resistance. Compared to this, the polypropylene film according to the present invention is designed to contain particles in a surface layer or contain a blend resin of polypropylene and a thermoplastic resin incompatible with the polypropylene. Accordingly, fine $\alpha$-crystal based spherulites, or a mesophase, is formed preferentially when a melt-extruded sheet is solidified on a cooling drum at a temperature of less than 60°C, preferably less than 40°C, and more preferably less than 30°C, in the film production process. Thus, the polypropylene film according to the present invention is substantially free of void formation caused by crystal transformation in the stretching step to avoid the generation of insulation defects and therefore, it can be high in capacitor element processing suitability even when in the form of a thin film, and can show high voltage resistance even in a high temperature environment. Here, a mesophase, which is also referred to as smectic phase, is in an intermediate ordered state between crystal and amorphous, and it is known that a mesophase is formed when molten material is solidified at a very high cooling speed. The mesophase is an intermediate phase that has a uniform structure during the stretching step and it is a preferred structure for reduction of insulation defects. In a constituent layer containing a blend resin of polypropylene and a thermoplastic resin incompatible with the polypropylene, the domain structure works to form surface irregularities and accordingly, it is free of generation of insulation defects such as void formation caused by crystal transformation in the stretching step, and therefore, the film can be high in capacitor element processing suitability even when in the form of a thin film, and can show high voltage resistance even in a high temperature environment. Preferred thermoplastic resins incompatible with polypropylene include, for example, polymethylpentene based resin.

Here, in the case where the polypropylene film according to the present invention is composed of two or more layers stacked in the thickness direction, the thickness of the A-layer (when both surface layers are A-layers, the total thickness of the two layers) preferably accounts for 1% to 60%, more preferably 5 to 40%, and still more preferably 5 to 25%, of the total thickness of the film from the viewpoint of the control of film forming property and surface profile. If the proportion of the A-layer is too large, voids may act to decrease the voltage resistance in high temperature environments, whereas if the proportion of the A-layer is small, it may be impossible in some cases to form roughness efficiently on the film surface, possibly making it impossible to ensure a required capacitor element processing suitability. The A-layer referred to here can be identified by, for example, preparing a section of the film and observing the cross section using a scanning electron microscope (SEM) or the like. Such cross-sectional observation serves to identify the A-layer, that is, a constituent layer containing a blend resin of polypropylene and a thermoplastic resin incompatible with the polypropylene, or the resin interface between the A-layer and the B-layer.

Described next is preferred polypropylene polymers for producing the polypropylene film according to the present invention. Polypropylene is generally used as material for producing packaging and capacitors, but the material to be used here is preferably one having a cold xylene soluble (CXS) fraction of 4 mass% or less. If this requirement is not satisfied, the material may be inferior in film forming stability, or the dielectric breakdown voltage may decrease when the film is stretched biaxially.

Here, the CXS fraction is determined by completely dissolving the film in xylene, then performing precipitation at room temperature, and measuring the polypropylene components dissolved in the xylene, which are considered to be low in crystallizability because of, for example, low stereoregularity or low molecular weight. A film of resin that contains these components in large amounts can have problems such as decreased voltage resistance. Accordingly, the CXS fraction is preferably 4 mass% or less, more preferably 3 mass% or less, and particularly preferably 2 mass% or less. Polypropylene having such a CXS fraction can be produced by preparing resin with enhanced catalytic activity or by washing the resulting resin with a solvent or the propylene monomer itself.

From the viewpoint of film forming property, such polypropylene more preferably has a melt flow rate (MFR) of 1 to 10 g/10 min (230°C, 21.18 N load), particularly preferably in the range of 2 to 5 g/10 min (230°C, 21.18 N load). Control of the melt flow rate (MFR) in the above range is realized by, for example, controlling the average molecular weight and molecular weight distribution.

Such a polypropylene material is composed mainly of a propylene homopolymer, but may contain other unsaturated hydrocarbon based copolymerization components or may be blended with a polymer that is not a propylene homopolymer, unless they impair the purpose of the present invention. Useful copolymerization components and monomer components of such a blend include, for example, ethylene, propylene (for a copolymerized blend), 1-butene, 1-pentene, 3-methylpentene-1,3-methylbutene-1,1-hexene, 4-methylpentene-1,5-ethylhexene-1,1-octane, 1-decene, 1-dodecene, vinyl cyclohexene, styrene, allyl benzene, cyclopentene, norbornene, and 5-methyl-2-norbornene. In regard to the copolymerization rate and blending rate, it is preferable that the copolymerization rate be less than 1 mol% and the blending rate be less than 10 mass% from the viewpoint of voltage resistance and heat resistance.

Furthermore, such polypropylene may also contain various additives such as crystal nucleating agent, antioxidant, thermal stabilizer, lubricant, antistatic agent, antiblocking agent, filler, viscosity adjustor, color protection agent, and resin other than polypropylene unless they impair the purpose of the present invention.

If an antioxidant is to be used in particular, it is important to identify the appropriate type and quantity from the viewpoint of long term heat resistance. More specifically, the antioxidant to be used is preferably a phenolic one with steric hindrance and at least one of those used is preferably of a high molecular weight type with a molecular weight of 500 or more. Various specific examples can be given, but it is preferable to use, for example, 2,6-di-t-butyl-p-cresol (BHT: molecular weight 220.4) in combination with 1,3,5-trimethyl-2,4,6-tris-(3,5-di-t-butyl-4-hydroxybenzyl) benzene (for example, Irganox (registered trademark) 1330, manufactured by BASF, molecular weight 775.2) or tetrakis [methylene-3(3,5-di-t-butyl-4-hydroxyphenyl) propionate] methane (for example, Irganox (registered trademark) 1010, manufactured by BASF, molecular weight 1177.7). The total content of these antioxidants is preferably in the range of 0.03 to 1.0 mass% of the total quantity of polypropylene. The long term heat resistance may deteriorate if the antioxidant content is too small. If the antioxidant content is too large, bleed-out of these antioxidants may occur to cause blocking at high temperatures, possibly having an adverse influence on a capacitor element. The content is more preferably 0.1 to 0.9 mass%, particularly preferably 0.2 to 0.8 mass%.

The polypropylene film according to the present invention preferably contains a polypropylene resin having a mesopentad fraction of 0.95 or more and a melting point of more than 160°C. The mesopentad fraction is more preferably 0.97 or more, still more preferably 0.98 or more. The mesopentad fraction is an indicator that represents the stereoregularity of the crystalline phase in polypropylene measured by nuclear magnetic resonance analysis (NMR analysis) and larger measurements suggest a higher degree of crystallinity, higher melting point, and more preferable because they serve to depress the variation in dielectric breakdown voltage in high temperature environments. There are no specific limitations on the upper limit of the mesopentad fraction. Thus, a method that has been preferred for preparing a polypropylene polymer having a high mesopentad fraction and a high melting point is to use a so-called Ziegler-Natta catalyst that contains a suitable electron donor component. If the mesopentad fraction of the polypropylene resin is less than 0.95, the polypropylene is so low in regularity that the film's strength and dielectric breakdown voltage in high temperature environments may decrease and the film may be broken during its conveyance in a step for vapor deposition to form a metal layer or a step for winding up a capacitor element. The polypropylene resin preferably has a melting point of 163°C or more, more preferably 165°C or more. If the melting point is 160°C or less, the crystallinity is so low that the film's dielectric breakdown voltage in high temperature environments may decrease and the film may be broken during its conveyance in a step for vapor deposition to form a metal layer or a step for winding up a capacitor element.

In the polypropylene film according to the present invention, it is preferable for the polypropylene resin to contain a thermofusible nucleating agent. Available nucleating agents for polypropylene include non-thermofusible nucleating agents, such as phosphates, benzoic acid salts, and talc, and thermofusible nucleating agents, of which the use of a thermofusible nucleating agent is preferred for the present invention. When molten polypropylene contains a thermofusible nucleating agent, the nucleating agent itself can fuse or melt, and accordingly, undergoes melting when heated and recrystallization when cooled. Observation of the aforementioned melting and recrystallization can be carried out by monitoring the process by melt rheology in a dynamic mode as defined in ISO6271-10 (1999). Available thermofusible nucleating agents include sorbitol derivatives, nonitol derivatives, and triamide derivatives. Specific examples include di(alkylbenzylidene) sorbitols such as dibenzylidene sorbitol, 2,4-dimethyl benzylidene sorbitol, 1,3-dimethyl benzylidene sorbitol, 2,4-diethyl benzylidene sorbitol, 1,3-dibutyl benzylidene sorbitol, 2,4-dibutyl benzylidene sorbitol, 1,3-dimethoxy benzylidene sorbitol, 2,4-dimethoxy benzylidene sorbitol, 1,3-diethoxy benzylidene sorbitol, 1,3-chlorobenzylidene, 2,4-methyl benzylidene sorbitol, monomethyl dibenzylidene sorbitol, 2,4-diethoxy benzylidene sorbitol, 1,3:2,4-dibenzylidene sorbitol, 1,3:2,4-dimethoxy benzylidene sorbitol, 1,3:2,4-diethoxy benzylidene sorbitol, bis-(3,4-dimethyl benzylidene) sorbitol, 1,2,3-trideoxy-4,6:5,7-bis-O-[(4-propyl phenyl) methylene]-nonitol, N,N',N"-tris-cyclohexyl-1,3,5-benzene-tricarboxamide, N,N',N"-tris-tert-butyl-1,3,5-benzene tricarboxyamide, and N,N',N"-tris-(2-methyl cyclohexane-1-yl) propane-1,2,3-tolylcarboxamide. In general, the aforementioned sorbitol based nucleating agents do not have high heat resistant temperatures. Therefore, if the polypropylene resin is extruded at a high temperature, the nucleating agents can generate pyrolysis gas, possibly causing air entrainment defects in the film. From such a point of view, nonitol based or triamide derivative based nucleating agents, among other thermofusible nucleating agents, are known to have high heat resistant temperatures and have been particularly preferred. With respect to the content, the thermofusible nucleating agents should account for 0.01 to 1.0 part by mass, preferably 0.02 to 0.6 part by mass, of the total quantity, i.e., 100 parts by mass, of the polypropylene resin. If the content is more than 1.0 part by mass, they can bleed from the film surface and transferred to rollers or the like during the film production process, possibly causing contamination of the film surface. If the content is less than 0.01 part by mass, the nucleating agents may not have sufficiently large effects. To ensure the development of advantageous effects of the invention, it is particularly preferable to use a polypropylene polymer that is very high in regularity and crystallinity and add a thermofusible nucleating agent.

Having high transparency, high lubricity, and good temperature characteristics, the polypropylene film according to the present invention can be used favorably in general industrial applications and packaging materials. Not only it is naturally useful for producing normal capacitors with a size of 30 $\mu$m or less, but also it is suitable for producing thin heat-resistant film capacitors that are required in automobiles (including hybrid cars), particularly those to be used in high temperature environments. In particular, the film thickness is preferably in the range of 0.5 $\mu$m or more and less than 15 $\mu$m, more preferably 0.5 $\mu$m or more and less than 10 $\mu$m, still more preferably 0.8 $\mu$m or more and less than 4.0 $\mu$m.

The polypropylene film according to the present invention is preferred as dielectric film for capacitors, though not limited to any specific capacitor type. Specifically, in regard to the electrode structure, it can be applied to wound foil capacitors, metal vapor deposited film capacitors, oil impregnated capacitors, which are impregnated with insulating oil, and dry capacitors, which are completely free of insulating oil. In regard to the shape, they may be of a wound type or of a laminated type. In view of its characteristics, however, the film according to the present invention is particularly preferred for use as a component of metal vapor deposited film capacitors.

Polypropylene film is commonly small in surface energy and difficult to treat stably for metal deposition and therefore, it is preferable to subject it to surface treatment before metal deposition in order to increase the metal adhesion strength. Specific examples of such surface treatment include corona discharge treatment, plasma treatment, glow treatment, and flame treatment. Commonly, polypropylene film has a surface wetting tension of up to around 30 mN/m, but in order to ensure strong adhesion to metal layer and high level of safety, it is preferable to perform these surface treatment techniques to achieve a surface wetting tension of about 37 to 50 mN/m, preferably 39 to 48 mN/m. Here, in the case of an A-layer / B-layer type two layer film, it is preferable for the B-layer, which is substantially free of particles, to be subjected to surface treatment to allow the resulting metal vapor-deposited film with a uniform thickness to ensure improved capacitor characteristics.

The polypropylene film according to the present invention can be produced by using a material having characteristics as described above and subjecting it to biaxial stretching. Useful biaxial stretching methods include inflation type simultaneous biaxial stretching, tenter type simultaneous biaxial stretching, and tenter type sequential biaxial stretching, of which the tenter type sequential biaxial stretching technique is preferred from the viewpoint of the control of the film's production stability, thickness uniformity, and surface roughness forming property.

Described next is the production method for the polypropylene film according to the present invention. First, polypropylene resin is melt-extruded onto a support to produce a polypropylene resin sheet and this polypropylene resin sheet is subjected to sequential biaxial stretching, that is, longitudinal stretching and then transverse stretching, followed by heat treatment and relaxation treatment to provide a polypropylene film. Specific steps are described below, but the invention is not limited thereto.

First, a polypropylene input material A having a mesopentad fraction of 0.95 or more and a melting point of more than 160°C and containing particles that account for an appropriate proportion as described above relative to 100 parts by mass of the polypropylene resin is supplied to a single screw extruder for A-layer production whereas a polypropylene input material B substantially free of particles is supplied to a single screw extruder for B-layer production. The melt layers are co-extruded through a feed-block unit at 200°C to 260°C, discharged from a slit nozzle to form a stack of three resin layers, i.e., A-layer / B-layer / A-layer, and solidified on a cooling drum controlled at a temperature of 10°C to 59°C to provide an unstretched sheet. For the polypropylene film according to the present invention, a mesophase is preferably formed in the unstretched sheet and the mesophase fraction is preferably 50% or more, more preferably 70% or more, still more preferably 90% or more, and most preferably 97% or more, from the viewpoint of decreasing insulation defects. Here, in order to determine the mesophase fraction in the unstretched sheet, the unstretched sheet is observed by wide angle X-ray diffraction and calculation is performed based on the resulting X-ray diffraction profile. The X-ray diffraction profile obtained is processed using a computer program for peak separation and separated into mesophase, $\alpha$-crystal, and amorphous profiles, which are then used to calculate the mesophase fraction. A diffraction profile attributed to $\alpha$-crystal is obtained from wide angle X-ray diffraction observation in the diffraction angle ($2\theta$) range of 10° to 30° and specifically, it contains five sharp peaks at around 14.1°, 16.9°, 18.6°, 21.6° and 21.9°. A diffraction profile attributed to mesophase contains two broad peaks at around 15° and 21 °. A diffraction profile attributed to the amorphous phase contains a very broad peak around a diffraction angle of 16.2° and it is obtained by observing molten polypropylene resin by wide angle X-ray diffraction. To allow a film to come in close contact with the casting drum, available methods include the electrostatic electricity application method, water surface tension based contacting method, air knife method, press roll method, and underwater casting method, any of which can work effectively. Here, when forming an A-layer / B-layer type two layer structure, the extrusion through a slit nozzle may be performed in such manner that the B-layer of the molten lamination polymer comes in contact with the casting drum, thereby allowing the B-layer to have a smooth surface.

Then, this unstretched film is stretched biaxially. First, the unstretched film is preheated as it passes between rolls maintained at 60°C to 150°C and then the film is stretched 2 to 10 times in the length direction while maintaining the temperature at 60°C to 150°C, followed by cooling to room temperature. Here, when the unstretched film is in the mesophase state, the temperature is preferably maintained at 60°C to 120°C. The ratio of stretching in the length direction is more preferably 4.5 to 9 times, still more preferably 5.1 to 8 times, still more preferably 5.4 to 8 times, and most preferably 5.8 to 8 times. There are no specific limitations on the stretching method or the draw ratio and appropriate ones may be adopted to suite the polymer characteristics.

Subsequently, the film uniaxially stretched in the longitudinal direction is conveyed into a tenter and, with the film edges held by clips, transverse stretching is performed at a temperature 140°C to 170°C by stretching the film 5.1 to 15 times, preferably 6 to 14 times, and more preferably 9 to 13 times, in the width direction. If the ratio of stretching in the width direction is less than 5.1 times, the polypropylene film may have poor mechanical strength in the width direction or large thickness unevenness, possibly leading to a low voltage resistance. If the ratio of stretching in the width direction is more than 15 times, on the other hand, the film tends to be broken easily and may decline in productivity.

For the present invention, from the viewpoint of ensuring in-plane uniform relaxation of the film, reduced local thickness unevenness, and improved voltage resistance, it is preferable for the subsequent heat treatment and relaxation treatment step to contain multi-stage heat treatment that is carried out in such a manner that the film, tensioned by clips in the width direction, is subjected to the first stage heat treatment at a temperature of 115°C or more and 140°C or less while being relaxed by 2% to 20% in the width direction, followed by subjecting the film, tensioned by clips in the width direction, to the second stage heat treatment for heat fixation performed at a temperature higher than that for the first stage heat treatment and lower than that for the transverse stretching.

In the relaxation treatment step, the relaxation rate is preferably 5% to 18%, more preferably 8% to 15%, from the viewpoint of ensuring sufficient heat dimensional stability. If it is more than 20%, the film may be relaxed excessively, possibly leading to products suffering from creases and uneven metal deposition, whereas if the relaxation rate is less than 2%, sufficient heat dimensional stability may not be achieved, possibly leading to capacitors that undergo capacity decrease or short-circuit breakage in a high temperature environment.

In order to allow the film to maintain molecular chain orientation during stretching and have increased voltage resistance, the first stage heat treatment is carried out preferably at temperature of 115°C or more and 140°C or less, more preferably 120°C or more and 138°C or less, and still more preferably 125°C or more and 135°C or less. If the heat treatment temperature is less than 115°C, the film may suffer from deterioration in capacitor characteristics, such as capacity decrease and short-circuit breakage, in a high temperature environment. If the heat treatment temperature is more than 140°C, on the other hand, the molecular chain orientation may be relaxed, possibly causing the film to decline in voltage resistance.

Performing the second stage heat treatment at a temperature more than that for the first stage heat treatment and less than that for the transverse stretching serves to relax the highly mobile amorphous molecular chains that are not completely relaxed in the first stage heat treatment, thus ensuring in-plane uniformity of the film structure. From this point of view, the temperature for the second stage heat treatment is preferably higher by 5°C or more than that for the first stage heat treatment and lower by 5°C than that for the transverse stretching, more preferably higher by 8°C or more than that for the first stage heat treatment and lower by 8°C than that for the transverse stretching.

After the multi-stage heat treatment, the film, tensioned by clips in the width direction, is conveyed out of the tenter through a cooling step at 80°C to 100°C, released from the clips holding the film edges, and sent to the wind-up step where the film is wound into a film roll product after cutting off the film edges. Here, before winding up the film, the surface on which metal is to be deposited is preferably subjected to corona discharge treatment in air, nitrogen, carbon dioxide gas, or a mixture thereof in order to ensure good adhesion with deposited metal.

For the present invention, there are no specific limitations on the method to be used to produce metal-laminated film by forming metal layer on the surface of the polypropylene film, and a preferred technique is, for example, to deposit aluminum on at least one side of the polypropylene film, thus producing metal-laminated film such as aluminum-deposited film to serve as internal electrode of a film capacitor. In this instance, another metal component such as, for example, nickel, copper, gold, silver, chromium, and zinc may be deposited simultaneously with or subsequent to the aluminum deposition. In addition, a protective layer of oil etc. may be formed on the vapor deposited film.

For the present invention, the formation of metal layer may be followed, as required, by annealing treatment or heat treatment of the metal-laminated film at a specific temperature. For insulation or other purposes, furthermore, at least one surface of the metal-laminated film may be coated with, for example, polyphenylene oxide.

Metal-laminated film thus obtained may be laminated or wound by various methods to provide film capacitors. A preferred production method for wound type film capacitors is described below.

Aluminum is deposited on one side of polypropylene film under reduced pressure. In this step, deposition is provided in a stripe-like form having margins running in the film's length direction. A knife is put into the center of each marginal space and the center of each metal deposited area to slit the film to produce reels of tape having a marginal space along one edge of the surface. Thus, reels of tape having a marginal space along either right- or left-hand, edge are obtained. The tape with a margin on the left-hand edge and the tape with a margin on the right-hand edge are put one on top of the other in such a manner that the metal deposited area sticks out of the marginal space in the width direction, and then they are wound up to provide a roll.

In the case where metal is deposited on both surfaces, one surface is metalized in a stripe-like form so that margins run in the length direction while the other surface is metalized in a stripe-like form so that a margin runs in the length direction along the center of the metalized area on the former surface. Then, a knife is put into the center of each marginal space on each surface to slit the film to provide reels of tape each having a margin along either edge of each surface (for example, a margin on the right-hand side of a surface and a margin on the left-hand side of the other surface). One of the resulting reels is combined with deposit-free composite film in such a manner that the metalized film sticks out of the composite film in the width direction, and then they are wound up to provide a roll.

After removing the core, the wound-up body thus prepared is pressed and an external electrode is formed at each end face by thermal metal spraying, followed by welding a lead wire to each external electrode to provide a wound type film capacitor. Film capacitors have been used in a variety of fields including railroad vehicles, automobiles (hybrid cars, electric vehicles), photovoltaic power generators, wind power generators, and general home electric appliances, and the film capacitor according to the present invention can also be applied favorably to these uses. It can also be used in other various applications such as packaging films, release films, process films, sanitary articles, agricultural articles, building articles, medical supplies, and the like.

The methods for measurement of characteristic values and methods for evaluation of effects used for the present invention are as described below.

(1) Thickness of film

Measurements were taken at a total of 10 randomly selected positions on a polypropylene film sample in a 23°C and 65%RH atmosphere using a contact type electronic micrometer (model K-312 A) manufactured by Anritsu Corporation, and their average was adopted as the thickness of the polypropylene film.

(2) Variation in film's dielectric breakdown voltage in 23°C atmosphere (23 R%)

The dielectric breakdown voltage test specified in JIS C2330 (2001) 7.4.11.2 Method B (plate electrode method) was conducted 30 times repeatedly, and the resulting values were divided by the thickness of the film (paragraph (1) above) and converted for representation in $V/\mu m$. From the 30 breakdown voltage measurements (calculations), the five largest measurements and the five smallest measurements were excluded and the percentage of the difference between the largest and the smallest of the remaining 20 measurements divided by the average of the 20 measurements was defined as the variation in dielectric breakdown voltage (23 R%) in a 23°C atmosphere.

(3) Variation in film's dielectric breakdown voltage in 125°C atmosphere (125 R%)

A film sample was heated at 125°C for 1 minute in a heat insulated oven, and the dielectric breakdown voltage test specified in JIS C2330 (2001) 7.4.11.2 Method B (plate electrode method) was conducted 30 times repeatedly in that atmosphere, and the resulting values were divided by the thickness of the film (paragraph (1) above) and converted for representation in V/μm. From the 30 breakdown voltage measurements (calculations), the five largest measurements and the five smallest measurements were excluded and the percentage of the difference between the largest and the smallest of the remaining 20 measurements divided by the average of the 20 measurements was defined as the variation in dielectric breakdown voltage (125 R%) in a 125°C atmosphere.

(4) Dielectric breakdown voltage of film (V/μm) in a 125°C atmosphere

The dielectric breakdown voltage test described in paragraph (3) above was conducted 30 times repeatedly and the resulting values were divided by the thickness of the film (paragraph (1) above) and converted for representation in V/μm. From the 30 breakdown voltage measurements (calculations), the five largest measurements and the five smallest measurements were excluded, and the average of the remaining 20 measurements was adopted as the film's dielectric breakdown voltage in a 125°C atmosphere.

(5) Film's tensile strength at break at 23°C (sum of the strength in the main axis direction and that in the perpendicular direction to the main axis)

A polypropylene film was prepared and a rectangular piece with a length of 50 mm and a width of 10 mm was cut out in an arbitrary direction to provide a sample <1>. Then, a sample <2> was prepared by cutting out after rotating the film in such a manner that its long sides made an angle of 15° with those of the above rectangular sample. Subsequently, samples <3> to <12> were prepared by cutting out after rotating the film in such a manner that their long sides of the rectangular samples made an angle of 15° with one another. Then, the rectangular sample <1> was set in a tensile tester (Tensilon Tester UCT-100, manufactured by Orientec Co., Ltd.) with an initial chuck distance of 20 mm and tensile test of the film was performed in a 23°C atmosphere at a tension speed of 300 mm/min. The load applied to the film at the time of sample rupture was read and divided by the cross section (film thickness × width (10 mm)) of the sample measured before the test to determine the stress at tensile strength at break. For each sample, 5 measurements were taken and the average was adopted for evaluation. The tensile strength at break values were calculated in the same way for the samples <2> to <12>, and the largest of the values of the samples <1> to <12> was adopted as the tensile strength at break in the main axis direction of the film, followed by calculating the sum of the tensile strength at break in the film's main axis direction and that in the perpendicular direction to the main axis.
Here, the film thickness measurements taken in paragraph (1) were used for the tensile strength at break calculation.

(6) Gloss

According to JIS K-7105 (1981), a digital variable glossimeter (UGV-5D, manufactured by Suga Test Instruments Co., Ltd.) was used under the conditions of an incidence angle of 60° and a light receiving angle of 60° to take five measurements from the surface that would come in contact with the casting drum surface, followed by averaging them to provide a value to represent the gloss.

(7) Three dimensional center surface average roughness (SRa)

The three dimensional surface roughness was measured using Surf-corder ET-4000A manufactured by Kosaka Laboratory Ltd. under the following conditions. A sample was set on the specimen table so that the X direction of the measuring field of view agrees with the main axis direction of the polypropylene film, with the surface (upper face) that would come in contact with the casting drum facing up for observation. Ten measurements were taken undermentioned conditions at different positions and the average of the center line surface roughness measurements was calculated to determine the three dimensional center surface average roughness (SRa).
  Equipment: "Surf-corder ET-4000 A" manufactured by Kosaka Laboratory Ltd.,
  Analysis software: i-Face model TDA31,
  Stylus end radius: 0.5 μm,
  Measuring field of view:

    X direction: 1000 μm pitch: 5 μm,
    Y direction: 250 μm pitch: 10 μm,

Needle pressure: 50 μN,
Measuring speed: 0.1 mm/s
Cut-off value: low range - 0.2 mm, high range - none
Leveling: total range
Filter: Gaussian filter (space type)
Magnification: 20,000 times.

(8) Mesopentad fraction

The polypropylene component of the film was subjected to extraction with n-heptane at 60°C for 2 hours and impurities and additives were removed from the polypropylene, followed by drying under reduced pressure at 130°C for 2 hours or more to provide a sample. The sample was dissolved in a solvent and the mesopentad fraction (mmmm) was determined under the following conditions using $^{13}$C-NMR.

Measuring conditions

- Equipment: DRX-500, manufactured by Bruker
- Measured nucleus: $^{13}$C nucleus (resonance frequency: 125.8 MHz)
- Measuring concentration: 10 mass%
- Solvent: a solution of benzene and deuterated orthodichlorobenzene mixed at 1:3 (volume ratio)
- Measuring temperature: 130°C
- Spin rotation speed: 12 Hz
- NMR sample tube: 5 mm tube
- Pulse width: 45° (4.5 μs)
- Pulse repeating time: 10 seconds
- Data point: 64K
- Cumulative number of times of measurement: 10,000
- Measuring mode: complete decoupling

Analysis conditions

Fourier conversion was performed for a LB (line broadening factor) of 1 and the mmmm peak was assumed to correspond to 21.86 ppm. Peak division was performed using WINFIT software (manufactured by Bruker). In this step, peak division was performed from the peak at the highest magnetic field strength as described below. After conducting automatic fitting by use of computer software and optimizing the peak division, the sum of the peak fractions of mmmm and ss (spinning side band peak of mmmm) was calculated to provide a value to represent the mesopentad fraction (mmmm).

(a) mrrm
(b) (c) rrrm (divided into assumed two peaks)
(d) rrrr
(e) mrmm + rmrr
(f) mmrr
(g) mmmr
(h) ss (spinning side band peak of mmmm)
(i) mmmm
(j) rmmr.

The same measuring procedure was repeated five times for the same sample and the mesopentad fraction measurements taken were averaged to provide a value to represent the mesopentad fraction of the sample.

(9) Melting point of polypropylene resin

In a differential scanning calorimeter (Exstar DSC6220, manufactured by Seiko Instruments Inc.), 3 mg of polypropylene chips were heated in a nitrogen atmosphere at 40°C/min from 30°C to 260°C. Then, the sample was maintained at 260°C for 5 minutes and cooled at 40°C/min to 30°C. Furthermore, the sample was maintained at 30°C for 5 minutes and heated at 40°C/min from 30°C to 260°C. The temperature of the peak in the heat absorption curve obtained in this heating period was adopted as the melting point of the polypropylene resin.

(10) Analysis of the content of thermofusible nucleating agent

First, 3 to 4 g of a polypropylene film sample was weighed, chopped, frozen, and crushed, and the crushed sample was subjected to Soxhlet extraction with a mixture liquid of methanol and chloroform (= 1/1 (v/v)). The extracted material was then subjected to FT-IR, $^1$H-NMR, and MALDI-MS measurement. Analysis was performed to determine whether or not a thermofusible nucleating agent was contained.

<FT-IR measuring conditions>

FT-IR equipment: IR Prestige-21 (manufactured by Shimadzu Corporation)
Detector: DLATGS
Measuring mode: permeation
Resolution: 4 cm$^{-1}$
Cumulative number of times of measurement: 64
Specimen preparation: KBr pellet method (4 mm diameter)

<$^1$H-NMR measuring conditions>

Equipment: ECA400 (manufactured by JEOL Ltd.)
Measured nucleus: $^1$H
Measuring frequency: 400 MHz

<MALDI-MS measuring conditions>

Equipment: AXIMA-TOF2 (manufactured by Shimadzu Corporation)
Ionization method: MALDI (matrix assisted laser desorption/ionization)

(11) Crystallization peak temperature

In a differential scanning calorimeter (Exstar DSC6220, manufactured by Seiko Instruments Inc.), 3 mg of a film sample is heated in a nitrogen atmosphere at 40°C/min from 30°C to 260°C. Then, the sample is maintained at 260°C for 5 minutes and cooled at 40°C/min to 30°C. The temperature of the peak in the heat dissipation curve obtained in this cooling period was adopted as the crystallization temperature.

(12) Average particle diameter of particles

The surface of a sample film fixed on the specimen table of a scanning electron microscope was subjected to ion etching treatment for 10 minutes using a sputtering apparatus under the conditions of a vacuum of 10$^{-3}$ Torr, a voltage of 0.25 kV, and an electric current of 12.5 mA. Then, the surface was subjected to gold sputtering in the apparatus and photographed by the scanning electron microscope at a magnification of 10,000 to 30,000 times. From the above photograph, 100 or more (n) particles were selected and their area equivalent circle diameters (Di) were determined, and then the average particle diameter of the particles in the film was calculated by the formula given below. Here, the area equivalent circle diameter (Di) refers to the diameter of the each individual circumscribed circle.

[Formula 1]

$$\text{Average particle diameter of particles in the film} = \sum_{i=1}^{n} D_i / n$$

(13) Mesophase fraction in unstretched sheet (wide angle X-ray diffraction)

An unstretched sheet was examined at room temperature using Nanoviewer, manufactured by Rigaku Corporation, in the diffraction angle ($2\theta$) range of 10° to 30°. The resulting diffraction profile was analyzed by the procedure described below.

Whether or not there was a profile attributed to a mesophase was examined based on the calculation described below.

(a) The diffraction profile was processed using a computer program for peak separation and separated into mesophase, $\alpha$-crystal, and amorphous profiles. The analysis was carried out using the IGOR Pro (Ver. 6) software provided by WaveMetrics, Inc.

(b) To ensure high accuracy, peak separation was performed using diffraction angles of 15° and 21°, which are attributed to the mesophase, 14.1°, 16.9° , 18.6° , 21.6° and 21.9°, which are attributed to the $\alpha$-crystal, and 16.2°, which is attributed to the amorphous material. These angles were fixed.

(c) Furthermore, height, half-width, instrument constant, and asymmetry were selected as parameters for ensuring high accuracy, and optimization was carried out. The areas ($m_{15}$ and $m_{21}$) of the diffraction profiles having mesophase-attributed peaks at 15° and 21° were calculated, and the areas ($\alpha_{14.1}$, $\alpha_{16.9}$, $\alpha_{18.6}$, $\alpha_{21.6}$, and $\alpha_{21.9}$) of the diffraction profiles having $\alpha$-crystal-attributed peaks at 14.1°, 16.9°, 18.6°, 21.6°, and 21.9° were calculated. The calculations were applied to the equation given below to determine the proportion of the area of the profile attributed to the mesophase, which was adopted as the mesophase fraction.

$$\text{(Equation) Mesophase fraction (\%)} = 100 \times (m_{15} + m_{21}) / (m_{15} + m_{21} + \alpha_{14.1} + \alpha_{16.9} + \alpha_{18.6} + \alpha_{21.6} + \alpha_{21.9})$$

(14) Evaluation of characteristics of metal-deposited capacitor (voltage resistance and reliability at 110°C)

Using a vacuum deposition apparatus manufactured by ULVAC, aluminum was vacuum-deposited on the film (the surface to come in contact with the casting drum) obtained in each Example and Comparative example described later to deposit a so-called T-type margin pattern having a film resistance of 8 $\Omega$/sq and having a margin in the direction perpendicular to the length direction, thus providing a reel of metal-deposited film with a width of 50 mm.

Then, using this reel, a capacitor element was wound up by an element winding-up machine (KAW-4NHB) manufactured by Kaido Mfg. Co., Ltd., which was then subjected to thermal metal spraying and heat treatment under reduced pressure at a temperature of 120°C for 10 hours, followed by attaching lead wires to produce a capacitor element.

Ten capacitor elements thus obtained were adopted and a voltage of 300 VDC was applied to the capacitor elements at a high temperature of 110°C. After maintaining the voltage for 10 minutes, the applied voltage was increased in steps at a rate of 50 VDC/min. This step-like voltage application was repeated to conduct so-called step-up test.

<Voltage resistance>

Changes in electrostatic capacity during this test were measured and plotted on a graph and the voltage at which the electrostatic capacity reached 70% of the initial value was divided by the film thickness (described in paragraph (1) above). The results obtained were used for voltage resistance evaluation, which was performed according to the following criteria.

S: 550 V/$\mu$m or more
A: 500 V/$\mu$m or more and less than 550 V/$\mu$m
B: 450 V/$\mu$m or more and less than 500 V/$\mu$m
C: 400 V/$\mu$m or more and less than 450 V/$\mu$m
D: less than 400 V/$\mu$m

Products ranked as S, A, or B are acceptable. Those ranked as C or D cannot serve for practical uses.

<Reliability>

The voltage was increased until the electrostatic capacity decreased to below 10% of the initial value and the capacitor element was disassembled to examine the state of destruction, followed by evaluating the reliability according to the following criteria.

A: Free from changes in the element shape and free from observable penetrating destruction.
B: Free from changes in the element shape, but suffering from penetrating destruction through not more than 10 film layers.
C: Suffering from observable changes in element shape or observable penetrating destruction through more than 10 film layers.
D: Suffering from destruction of element shape.

Products ranked as A can be used without problems and those ranked as B can be used under favorable conditions. Those ranked as C or D cannot serve for practical uses.

Examples

The advantageous effect of the invention is described in more detail below with reference to Examples.

(Example 1)

Polypropylene resin polymerized with a Ziegler-Natta catalyst having a mesopentad fraction of 0.98, a melting point of 167°C, and a melt flow rate (MFR) of 2.6 g/10 minutes and a nonitol type thermofusible nucleating agent, specifically NX8000 $\alpha$-crystal nucleating agent manufactured by Milliken, were extruded from a kneading extruder set up at 240°C so that they would be combined at a ratio of 100 parts by mass to 0.3 part by mass, and the resulting strand was cooled in water and processed into chips, thereby providing a polypropylene resin material (B). Polypropylene resin prepared for the A-layer having a mesopentad fraction of 0.98, a melting point of 167°C, and a melt flow rate (MFR) of 2.6 g/10 minutes and silica particles with an average particle diameter of 0.3 $\mu$m, SFP-20 MHE (silane coupling surface treatment) manufactured by Denki Kagaku Kogyo Co., Ltd., were extruded from a kneading extruder set up at 240°C so that they would be combined at a ratio of 100 parts by mass to 0.1 part by mass, and the resulting strand was cooled in water and processed into chips, thereby providing a polypropylene resin material (A). The polypropylene resin material (B) was fed to a single screw melt extruder for B-layer preparation while the polypropylene resin material (A) was fed to a single screw melt extruder for A-layer preparation, and they were melt-extruded at 240°C and filtered through a sintered filter with a 80 $\mu$m pore diameter to remove foreign objects. While adjusting the extrusion rate using a feed block to form a stack of A/B/A type three layers with a layer thickness ratio of 1/8/1 (outer A-layers accounting for 20% of the total film thickness), the molten polymer layers were discharged from a T-die and the resulting molten sheet was brought into close contact, by applying static electricity, with a casting drum maintained at 30°C to achieve cooling and solidification, thereby providing an unstretched sheet. Subsequently, the sheet was preheated gradually to 143°C using a group of several rolls and, while being maintained at a temperature of 143°C, passed between rolls with different circumferential speeds to achieve 6.0-fold stretching in the length direction. Subsequently, the film was sent into a tenter where it was stretched 10 times in the width direction at a temperature of 163°C, and then subjected to the first stage heat treatment and relaxation treatment step designed for performing heat treatment at 130°C while maintaining 10% relaxation in the width direction, followed by the second stage heat treatment step designed for performing heat treatment at 140°C with the film tensioned by clips in the width direction. Subsequently, the film was cooled at 100°C, conveyed out of the tenter, and released from the clips holding the film edges, and then the film surface (the one to come into contact with the casting drum) was subjected to corona discharge treatment in air at an intensity of 25 W·min/m$^2$, and finally wound up into a film roll with a film thickness of 2.0 $\mu$m. The polypropylene film sample prepared in this Example showed film characteristics and capacitor characteristics as given in Table 1, indicating that it was very high in both voltage resistance and reliability.

(Example 2)

Except that the polypropylene resin used for the B-layer was free of a thermofusible nucleating agent, the same procedure as in Example 1 was carried out to produce a polypropylene film with a thickness of 2.2 $\mu$m. The polypropylene film sample prepared in this Example showed film characteristics and capacitor characteristics as given in Table 1, indicating that the capacitor was high in reliability and practically acceptable in voltage resistance.

(Example 3)

Except that the heat treatment following the biaxial stretching was carried out under temperature conditions as described in Table 1, the same procedure as in Example 1 was carried out to produce a polypropylene film. The polypropylene film sample prepared in this Example showed film characteristics and capacitor characteristics as given in Table 1, indicating that the capacitor was practically acceptable in both voltage resistance and reliability.

(Example 4)

Polypropylene resin prepared for A-layer preparation having a mesopentad fraction of 0.98, a melting point of 167°C, and a melt flow rate (MFR) of 2.6 g/10 minutes and silica particles with an average particle diameter of 0.1 $\mu$m, San-Seal SSP-M01 manufactured by Tokuyama Corporation, were extruded from a kneading extruder set up at 240°C so that they would be combined at a ratio of 100 parts by mass to 0.25 part by mass, and the resulting strand was cooled in water and processed into chips, thereby providing a polypropylene resin material (C). Then, except that polypropylene resin polymerized with a Ziegler-Natta catalyst having a mesopentad fraction of 0.98, a melting point of 167°C, and a melt flow rate (MFR) of 2.6 g/10 minutes was fed to a single screw melt extruder for B-layer preparation while feeding the polypropylene resin material (C) to a single screw melt extruder for A-layer preparation, the same procedure as in Example 2 was carried out to produce a polypropylene film with a thickness of 3.5 $\mu$m. The polypropylene film sample prepared in this Example showed film characteristics and capacitor characteristics as given in Table 1, indicating that it was the highest in voltage resistance and very high in reliability.

(Example 5)

Except for adjusting the extrusion rate to form a stack of A/B type two layers with a layer thickness ratio of 1/8 (outer A-layer accounting for 11% of the total film thickness), discharging the stack of molten polymer layers so that the B-layer would come in contact with the casting drum, and subjecting the B-layer surface to film surface corona discharge treatment after biaxial stretching, the same procedure as in Example 4 was carried out to produce a polypropylene film with a thickness of 3.5 $\mu$m. The polypropylene film sample prepared in this Example showed film characteristics and capacitor characteristics as given in Table 1, indicating that it was the highest in voltage resistance and very high in reliability.

(Comparative example 1)

Polypropylene resin (100 parts by mass) polymerized with a Ziegler-Natta catalyst having a mesopentad fraction of 0.98, a melting point of 167°C, and a melt flow rate (MFR) of 2.6 g/10 minutes was fed to a single screw melt extruder, melt-extruded at 240°C, and filtered through a sintered filter with a 80 $\mu$m pore diameter to remove foreign objects, and the molten polymer layers were discharged from a T-die and the resulting molten sheet was brought into close contact, by applying static electricity, with a casting drum maintained at 90°C to achieve cooling and solidification, thereby providing an unstretched sheet. Subsequently, the sheet was preheated gradually to 143°C using a group of several rolls and, while being maintained at a temperature of 143°C, passed between rolls with different circumferential speeds to achieve 5.0-fold stretching in the length direction. Subsequently, the film was sent into a tenter where it was stretched 10 times in the width direction at a temperature of 163°C, and then subjected to the first stage heat treatment and relaxation treatment step designed for performing heat treatment at 155°C while maintaining 10% relaxation in the width direction, followed by the second stage heat treatment step designed for performing heat treatment at 140°C with the sheet tensioned by clips in the width direction. Subsequently, the film was cooled at 100°C, conveyed out of the tenter, and released from the clips holding the film edges, and then the film surface (the one to come into contact with the casting drum) was subjected to corona discharge treatment in air at an intensity of 25 W·min/m$^2$, and finally wound up into a film roll with a film thickness of 2.2 $\mu$m. The polypropylene film sample prepared in this Comparative example showed film characteristics and capacitor characteristics as given in Table 1, indicating that the capacitor was very low in voltage resistance and at a defective level in terms of reliability as suggested by element breakage etc.

(Comparative example 2)

Except that the polypropylene resin (A) prepared in Example 1 was melt-excluded alone to form a single layer film, the same procedure as in Example 1 was carried out to produce a polypropylene film with a thickness of 2.2 $\mu$m. The polypropylene film sample prepared in this Comparative example showed film characteristics and capacitor characteristics as given in Table 1, indicating that the capacitor was low in voltage resistance and at a practically defective performance level in terms of reliability as suggested by deformation in the element shape.
[Table 1]

[Table 1]

| | | Example 1 | Example 2 | Example 3 | Example 4 | Example 5 | Comparative example 1 | Comparative example 2 |
|---|---|---|---|---|---|---|---|---|
| Lamination structure | - | A/B/A | A/B/A | A/B/A | A/B/A | A/B | single layer | single layer |
| Mesophase fraction in unstretched sheet | % | 0 | 96 | 0 | 97 | 97 | 0 | 99 |
| Addition of thermofusible nucleating agent | - | Existent | absent | existent | absent | absent | absent | absent |
| Type and size of particles | - | silica 0.3 μm | silica 0.3 μm | silica 0.3 μm | silica 0.1 μm | silica 0.1 μm | absent | silica 0.3 μm |
| Non-polypropylene resin blended in A-layer | - | Absent | absent | absent | absent | absent | absent | absent |
| Temperature for 1st stage heat treatment | °C | 130 | 130 | 155 | 155 | 155 | 155 | 130 |
| Temperature for 2nd stage heat treatment | °C | 140 | 140 | 140 | 140 | 140 | 140 | 140 |
| Film thickness | μm | 2.0 | 2.2 | 2.0 | 3.5 | 3.5 | 2.2 | 2.2 |
| Variation in dielectric breakdown voltage 23 R% | % | 9 | 14 | 19 | 12 | 9 | 24 | 18 |
| Variation in dielectric breakdown voltage 125 R% | % | 29 | 35 | 42 | 32 | 27 | 52 | 54 |
| Film's dielectric breakdown voltage in 125°C atmosphere | V/μm | 555 | 530 | 515 | 533 | 560 | 426 | 443 |
| Sum of film tensile strengths at break at 23°C | MPa | 563 | 532 | 508 | 538 | 545 | 477 | 455 |
| Gloss | % | 150 | 148 | 150 | 148 | 150 | 129 | 141 |
| Capacitor characteristics at 110°C | voltage resistance | A | B | B | S | S | D | C |
| | reliability | A | A | B | A | A | D | C |

EP 3 196 234 A1

**Claims**

1. Polypropylene film meeting the following requirement: when the dielectric breakdown voltage (V/$\mu$m) of a film thereof in a 125°C environment is measured at 30 points, followed by excluding the five largest measurements and the five smallest measurements, the percentage (125R%) of the difference between the largest and the smallest of the remaining 20 measurements divided by the average of the 20 measurements is smaller than 50%, and when the dielectric breakdown voltage (V/$\mu$m) of a film thereof in a 23°C environment is measured at 30 points, followed by excluding the five largest measurements and the five smallest measurements, the percentage (23R%) of the difference between the largest and the smallest of the remaining 20 measurements divided by the average of the 20 measurements is smaller than 20%.

2. Polypropylene film as set forth in claim 1, wherein at least either of the film surfaces has a gloss of 140% or more.

3. Polypropylene film as set forth in either claim 1 or 2, wherein the sum of the tensile strength at break in the film's main axis direction and the tensile strength at break in the direction perpendicular to the film's main axis, both measured at 23°C, is 500 MPa or more.

4. Polypropylene film as set forth in any one of claims 1 to 3, wherein at least either of the film surfaces has a three dimensional center surface average roughness SRa of 30 nm or more.

5. Polypropylene film as set forth in any one of claims 1 to 4, having a layer containing particles at least at either of the film surfaces.

6. Polypropylene film as set forth in any one of claims 1 to 5, comprising polypropylene resin with a mesopentad fraction of 0.95 or more and a melting point of more than 160°C containing a thermofusible nucleating agent.

7. Metal layer-laminated film comprising polypropylene film as set forth in any one of claims 1 to 6 and a metal layer covering at least either of the surfaces thereof.

8. A film capacitor comprising metal layer -laminated film as described in claim 7.

## INTERNATIONAL SEARCH REPORT

| International application No. |
|---|
| PCT/JP2015/076278 |

**A. CLASSIFICATION OF SUBJECT MATTER**
*C08J5/18*(2006.01)i, *B32B27/32*(2006.01)i, *C08L23/12*(2006.01)i, *H01B3/00* (2006.01)i, *H01B3/44*(2006.01)i, *H01G4/18*(2006.01)i

According to International Patent Classification (IPC) or to both national classification and IPC

**B. FIELDS SEARCHED**

Minimum documentation searched (classification system followed by classification symbols)
C08J5/18, B32B27/32, C08L23/12, H01B3/00, H01B3/44, H01G4/18

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho  1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-246683 A (Mitsui Chemicals, Inc.), 14 September 1999 (14.09.1999), claims; examples (Family: none) | 1-8 |
| A | JP 2004-161799 A (Toray Industries, Inc.), 10 June 2004 (10.06.2004), claims; paragraphs [0093] to [0096], [0133], [0143] to [0148] (Family: none) | 1-8 |
| A | JP 2001-250738 A (Toray Industries, Inc.), 14 September 2001 (14.09.2001), claims; examples (Family: none) | 1-8 |

☒  Further documents are listed in the continuation of Box C.  ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 December 2015 (07.12.15) | 15 December 2015 (15.12.15) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (July 2009)

**INTERNATIONAL SEARCH REPORT**

International application No.

PCT/JP2015/076278

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/002123 A1 (Toray Industries, Inc.), 05 January 2012 (05.01.2012), claims; examples & US 2013/0170096 A1 claims; examples & EP 2590191 A1 & CN 102959656 A & KR 10-2013-0100953 A | 1-8 |
| A | JP 59-191207 A (Toray Industries, Inc.), 30 October 1984 (30.10.1984), claims; examples (Family: none) | 1-8 |
| A | JP 4-163042 A (Toray Industries, Inc.), 08 June 1992 (08.06.1992), claims; examples (Family: none) | 1-8 |
| P,A | JP 2014-205799 A (Oji Holdings Corp.), 30 October 2014 (30.10.2014), claims; examples (Family: none) | 1-8 |
| P,A | WO 2014/148547 A1 (Toray Industries, Inc.), 25 September 2014 (25.09.2014), claims; paragraphs [0053], [0058] to [0068] & JP 5660261 B | 1-8 |
| E,A | JP 2015-201616 A (Oji Holdings Corp.), 12 November 2015 (12.11.2015), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010501712 W

- JP 2010501382 W

**Non-patent literature cited in the description**

- *Nikkei Electronics,* 17 September 2012, 57-62